# EUROPÄISCHE PATENTSCHRIFT

(11) **EP 3 699 387 B1**
(45) Veröffentlichungstag und Bekanntmachung des Hinweises auf die Patenterteilung: **06.09.2023**
(21) Anmeldenummer: 19217873.9
(22) Anmeldetag: 19.12.2019
(51) Int. Cl.: E06B 7/30, F21V 33/00, B65D 90/10, B01J 3/00, F17D 3/00, F24F 13/20, F25B 49/00, G01F 23/02

(54) **GEHÄUSE EINER KLIMA- ODER LÜFTUNGSANLAGE MIT EINEM SCHAUGLAS**
HOUSING OF AN AIR CONDITIONING OR VENTILATION SYSTEM WITH AN INSPECTION GLASS
BOITIER DE CLIMATISATION OU DE VENTILATION AVEC UN VERRE D'INSPECTION

(30) Priorität: 20.02.2019 DE 102019104263
(43) Veröffentlichungstag der Anmeldung: 26.08.2020
(73) Patentinhaber: AL-KO Therm GmbH, 89343 Jettingen-Scheppach (DE)
(72) Erfinder: Veitenhansl, Horst, 89312 Günzburg (DE)
(74) Vertreter: Haseltine Lake Kempner LLP

(56) Entgegenhaltungen:
- WO-A1-2012/028813
- WO-A1-2020/078509
- DE-A1-102011 011 763
- DE-A1-102017 105 267
- DE-U1- 8 319 919
- FR-A1- 2 701 998
- US-A- 3 764 794
- US-A1- 2013 148 952
- US-A1- 2015 198 366

## Beschreibung

Die Erfindung betrifft ein Gehäuse einer Klima- oder Lüftungsanlage mit einem Schauglas zum Einbau in eine Wandung eines geschlossenen Innenraumes, wobei das Schauglas eine durchsichtige Scheibe zur Beobachtung des Innenraumes und in den Innenraum gerichtete Leuchtmittel zur Beleuchtung aufweist.

Ein Schauglas der oben genannten Art ist beispielsweise aus der Druckschrift DE 83 19 919 U1 bekannt. Diese zeigt ein Kesselschauglas, welches eine eingespannte Glasscheibe und eine zum Innenraum gerichtete Beleuchtung aufweist. Das Kesselschauglas besitzt einen Kesselflansch, mit dem es mit der einwandigen Glasscheibe an der Wandung eines Kessels befestigt wird. Zur Unterbringung der Beleuchtung ist ein seitlich und auf der Beobachtungsseite - also der Außenseite des Kessels - angeordneter Hohlraum angeordnet, der durch eine etwa parallel zur Glasscheibe verlaufende Trennwand in eine Lampenkammer und eine Schalterkammer mit darüber liegendem Schalter unterteilt ist. Der Hohlraum mit der Lampenkammer und dem Schaltergehäuse ragen somit weit über die Glasscheibe in den Außenraum und behindern damit eine problemlose Sicht nach innen in den Kessel, indem das Sichtfeld beziehungsweise der durch einen außen stehenden Beobachter beobachtbaren Raumwinkel stark eingeengt wird. Ein weiteres Schauglas der eingangs genannten Art ist in der Druckschrift DE 102 011 011 763 A1 beschrieben. Diese zeigt eine Schauglas-Armatur mit einer einzigen durchsichtigen Scheibe und wenigstens einem Leuchtmittel zur Beleuchtung der Scheibe, wobei das Leuchtmittel wenigstens eine Mehrzahl von Leuchtdioden aufweist. Konkret gezeigt ist ein Schauglas im Querschnitt, welches im äußeren Flansch auf der Außenseite der mit dem Flansch eingespannten Glasscheibe eine zur Glasscheibe offene Ringnut aufweist, in welcher eine Vielzahl von Leuchtdioden angeordnet sind. Aufgrund der Ausführung des Schauglases mit nur einer einzigen Scheibe und der außen angeordneten Beleuchtung ist einerseits der mögliche Raumwinkel der Beobachtung zu klein und andererseits auch die mögliche Ausleuchtung des Innenraumes durch die Leuchtmittel zu gering.

Aus der nachveröffentlichten Druckschrift WO 2020 / 078509 A1 ist noch ein Gehäuse einer RLT-Anlage mit einem Schauglas zum Einbau in eine Wandung eines geschlossenen Innenraumes bekannt mit einem umlaufenden Flansch, einer inneren und äußeren Scheibe zur Beobachtung des Innenraumes von außerhalb des Innenraumes und einer Vielzahl LEDs mit einer unmittelbar in den Innenraum ausgerichteten Hauptemissionsrichtung, welche auf der Innenseite angeordnet sind. Dieses Schauglas beinhaltet jedoch keine Lichtabdeckung, welche zum einen hinter den LEDs angeordnet ist, sodass das von den LEDs abgestrahlte Licht keine nach außen gerichtete Komponente aufweist, und zum anderen bis an die innere Scheibe heranreicht, damit kein Licht in den zentralen Zwischenraum zwischen den Scheiben einstrahlt und eine Blendwirkung durch die Beleuchtung vermieden wird.

Als weiteren Stand der Technik wird noch auf die Druckschrift US 2015 / 0198366 A1 verwiesen, sowie auf die Druckschrift DE 10 2017 105 267 A1, die ein Gehäuse einer RLT-Anlage mit einer Außenwandung und einem Innenraum offenbart, wobei die Außenwandung ein Schauglas zur Beobachtung des von der Außenwandung abgeschlossenen Innenraums aufweist, wobei das Schauglas einen umlaufenden Flansch zur Befestigung des Schauglases in einer Öffnung der Wandung sowie genau zwei Scheiben zur Beobachtung des Innenraums von außerhalb des Innenraums aufweist.

Es ist daher Aufgabe der Erfindung, ein Gehäuse einer Klima- oder Lüftungsanlage mit einem Schauglas zu beschreiben, welches einen verbesserten Beobachtungsraumwinkel und eine verbesserte Ausleuchtung des zu beobachtenden Innenraumes ohne Blendwirkung für den Beobachter bereitstellt.

Diese Aufgabe wird durch die Merkmale des Anspruchs 1 gelöst. Vorteilhafte Weiterbildungen der Erfindung sind Gegenstand untergeordneter Ansprüche.

Zur Lösung dieser Aufgabe schlägt der Erfinder ein Gehäuse einer Klima- oder Lüftungsanlage mit einem Schauglas gemäß Anspruch 1 vor, welches Schauglas einen umlaufenden Flansch zur Befestigung des Schauglases in einer Öffnung der Wandung, und genau zwei Scheiben zur Beobachtung des Innenraumes von außerhalb des Innenraumes aufweist, nämlich eine innere und eine äußere Scheibe, wobei die innere Scheibe auf der zu dem zu beobachtenden Innenraum hin orientierten Seite des Schauglases vorliegt und die Beobachtung von außen nach innen in den zu beobachtenden Innenraum hinein erfolgt, und eine Vielzahl von, über den überwiegenden Teil des peripheren Bereichs des Schauglases angeordneter, LEDs mit einer unmittelbar in den Innenraum ausgerichteten Hauptemissionsrichtung, wobei die LEDs zwischen der inneren und der äußeren Scheibe angeordnet sind, und eine ein- oder mehrteilige Lichtabdeckung, welche hinter den LEDs derart angeordnet ist, dass das von den LEDs abgestrahlte Licht keine nach außen gerichtete Komponente aufweist, wobei die Lichtabdeckung zwischen der inneren und äußeren Scheibe positioniert und derart ausgebildet ist, dass sie bis an die innere Scheibe heranreicht, damit kein Licht in den zentralen Zwischenraum zwischen den Scheiben einstrahlt und eine Blendwirkung durch die Beleuchtung vermieden wird.

Der Begriff "Glas" im Wort "Schauglas" ist hier lediglich als durchsichtiges Bauelement zu verstehen und bezieht sich nicht ausschließlich auf das Material "Glas" an sich.

Im Sinne der Anmeldung ist unter "Wandung" auch die zumindest weitgehend ebene Fläche einer Gehäuse- oder Raumwand, einer Tür oder einer Luke zu verstehen Entsprechend soll der äußere und innere Flansch des Schauglases dazu ausgebildet sein, in einer Öffnung der Wandung eingebaut zu werden.

Grundsätzlich kann bei dem vorgenannten Schauglas die Wandung selbst als Abstandshalter zwischen der äußeren und inneren Scheibe beziehungsweise zwischen den beiden Flanschteilen dienen. Dies kann beispielsweise dadurch geschehen, dass die beiden Scheiben unmittelbar oder mit einem Zwischenelement auf beiden Seiten der Wandung aufliegen und beidseitig von einem an der Wandung zu befestigendem Flansch gehalten werden. Dabei können die beiden Scheiben jedoch auch unmittelbar mit dem jeweils außen oder innen liegenden Flansch fest verbunden sein, wobei diese Flansche selbst unmittelbar an der Wandung befestigt werden können. Auch eine Kombination beider Varianten ist möglich.

In einer anderen Variante des vorgenannten Schauglases ist dieses derart ausgebildet, dass ein ein- oder mehrteiliger Abstandshalter zwischen dem äußeren und inneren Teil des Flansches oder zwischen den Scheiben angeordnet ist. Durch diese Variante wird an die Gleichmäßigkeit der Wandung weniger Anforderung gestellt, wobei jedoch eine zuverlässige Parallelausrichtung der Scheiben garantiert ist.

Erfindungsgemäß ist das Schauglas mit einer ein- oder mehrteiligen Lichtabdeckung hinter den LEDs ausgestattet, so dass das von den LEDs abgestrahlte Licht keine nach außen - also dem Beobachter entgegen - gerichtete Komponente aufweist und damit eine Blendwirkung durch die Beleuchtung vermieden wird. Weiterhin erfindungsgemäß wird dabei die Lichtabdeckung derart ausgebildet, dass sie bis an die innere Scheibe heranreicht und damit kein Licht in den zentralen Zwischenraum zwischen den Scheiben einstrahlt. Beispielsweise kann die Lichtabdeckung in ihrem radialen Schnitt L-förmig ausgebildet werden.

Mit Bezug auf einen problemlosen Einbau und zur Vermeidung von unnötigen Ausrichtungen bei der Vorbereitung der Wandung zum Einbau des Schauglases ist es von besonderem Vorteil, wenn das Schauglas im Querschnitt parallel zur Wandung eine Kontur aufweist, die für einen Einbau in einen runden Ausschnitt ausgelegt ist, vorzugsweise kreisrund ausgeführt ist. Im Falle einer kreisrunden Ausführung des durch die Wandung dringenden Querschnitts kann sehr einfach für eine weitestgehend spaltfreie Einpassung des Schauglases in eine zuvor erzeugte kreisrunde Öffnung in der Wandung gesorgt werden und somit auf einfache Weise eine gute Abdichtung im Durchdringungsbereich der Wandung bewirkt werden. Falls lediglich Teile der Querschnittskontur am kreisrunden Ausschnitt der Wandung anliegen, so ist es vorteilhaft, an der zur Wandung gerichteten Fläche eine eigene Abdichtung anzuordnen. Dies kann zum Beispiel durch eine zusätzliche separate umlaufende Dichtfläche oder einen O-Ring oder auch durch eine zusätzlich aufgetragene Dichtmasse für die gegebenenfalls notwendige Abdichtung geschehen. Selbstverständlich kann diese Art der Abdichtung auch an beiden benachbarten Flansch- / Wandungsflächen angewendet werden. Auch eine Kombination mit der Abdichtung durch eine passgenaue Öffnung in der Wandung liegt im Rahmen der Erfindung.

Vorteilhaft ist es auch, wenn die als Leuchtmittel verwendeten LEDs auf einem rondenförmigen Träger (Ronde = Querschnitt eines Hohlzylinders senkrecht zur Symmetrieachse) angeordnet sind. Ein solcher Träger kann auch einen radialen Einschnitt beziehungsweise Spalt aufweisen, der es erleichtert, den Träger in den Abstandshalter einzuklipsen. Außerdem kann der Träger einen Teil der Verdrahtung für die LEDs aufnehmen, um das Substrat, auf dem die LEDs üblicherweise angeordnet sind, aufzunehmen und zu stabilisieren.

Erfindungsgemäß werden die LEDs zwischen der inneren und äußeren Scheibe positioniert, so dass diese damit gegen Umwelteinflüsse weitgehend geschützt sind beziehungsweise keine zusätzlichen Schutzmaßnahmen benötigen. Im Übrigen ist eine derartige Bauweise auch bezüglich möglicherweise bestehender Hygienevorschriften günstig, die für das Gehäuse oder den Raum gelten können, in dessen Wandung das Schauglas eingebaut werden soll.

Erfindungsgemäß ist zudem die Lichtabdeckung zwischen der inneren und äußeren Scheibe positioniert. Auch hierdurch wird dafür gesorgt, dass das Schauglas auf der Außenseite möglichst wenig Spalten und Kanten aufweist und damit einfach zu reinigen ist. Außerdem sorgt eine von den Scheiben abgedeckte Anordnung der Lichtabdeckung auch für eine kompakte Bauweise.

Die Energieversorgung der LEDs kann auf unterschiedliche Weise ausgeführt werden. Im einfachsten Fall kann beispielsweise zur Energieversorgung der LEDs eine nach außen führende Stromleitung vorgesehen werden, welche mit einer externen Stromquelle verbunden wird. Aufgrund des niedrigen Energieverbrauchs der LEDs kann jedoch auch ein Batteriegehäuse mit Batterie oder Akku im Schauglas integriert werden, um die LEDs bei Bedarf mit Strom zu versorgen.

Alternativ kann - gegebenenfalls ergänzend zum Akku - auch eine kontaktlose Energieübertragung verwendet werden, indem das Schauglas mit einem entsprechenden Empfänger für eine Nahfeldübertragung ausgestattet wird und im Bereich der Wandung nahe am Schauglas ein hierzu kompatibler Sender installiert wird. Grundsätzlich kann hierbei das Prinzip kapazitiver oder induktiver Kopplung verwendet werden. Anwendungen dieser Art sind beispielsweise bei elektrischen Zahnbürsten, Rasierapparaten oder Mobiltelefonen bekannt. Der Vorteil einer solchen Ausführung liegt darin, dass das Schauglas ohne Kabeldurchführungen hermetisch versiegelt ausgestaltet werden kann.

In einer anderen Alternative kann - falls der Außenbereich ausreichend beleuchtet ist - das Schauglas zur Energieversorgung der LEDs mindestens eine nach außen gerichtete Solarzelle mit mindestens einem Stromspeicherelement ausgestattet werden.

Vorteilhaft können die Solarzellen peripher und im Bereich der LEDs angeordnet werden. Dabei kann beispielsweise auch das Solarzellenelement gleichzeitig als Abschattung oder Teil der Abschattung der LEDs dienen.

Weiterhin kann am äußeren Teil des Flansches, also auf der Außenseite der Wandung, ein Schalter zum Ein- und Ausschalten der LEDs angebracht sein.

Wie bereits oben erwähnt, beschreibt der Begriff "Glas" im Wort "Schauglas" nicht ausschließlich das Material "Glas", sondern steht für jegliches durchsichtiges Scheibenmaterial. Entsprechend können im Rahmen der Erfindung die Scheiben des erfindungsgemäßen Schauglases aus unterschiedlichsten durchsichtigen Materialien bestehen. Vorzugsweise handelt es sich dabei um Glas, Glaskeramik oder durchsichtigem Kunststoff, insbesondere Acrylglas. Im Rahmen der Erfindung liegt es auch, wenn die zwei Scheiben aus unterschiedlichen Materialien hergestellt sind.

Außerdem kann mindestens eine der Scheiben eine mindestens einseitige mindestens einlagige Oberflächenbeschichtung aufweisen. Durch derartige Beschichtungen kann beispielsweise eine gegen Abrasion besonders robuste Oberfläche erreicht werden. Außerdem kann durch eine Beschichtung auch der Grad der Spiegelung an der Scheibenoberfläche reduziert beziehungsweise die Lichtdurchlässigkeit verbessert werden. Ebenso können bestimmte Lichtfrequenzen gefiltert werden.

Es wird außerdem darauf hingewiesen, dass im Schauglas auch Scheiben mit unterschiedlichen Materialien gleichzeitig verwendet werden können.

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind. Es wird darauf hingewiesen, dass die gezeigten Figuren Prinzipskizzen, also keine maßstäblichen Konstruktionszeichnungen, darstellen und somit die dargestellten Größenverhältnisse in der Realisierung anders ausfallen können. Elektrische Verdrahtungen wurden zur besseren Übersicht weggelassen.

Es zeigen im Einzelnen:
- FIG 1:: Schauglas im Schnitt parallel zur Symmetrieachse mit beidseitig befestigtem Flansch;
- FIG 2:: Schauglas aus FIG 1 in der Aufsicht von innen;
- FIG 3:: Schauglas im Schnitt parallel zur Symmetrieachse mit einseitig befestigtem Flansch;
- FIG 4:: Schauglas aus FIG 3 in der Aufsicht von außen;
- FIG 5:: Schauglas aus FIG 3 in der Aufsicht vom innen;
- FIG 6:: Schauglas im Schnitt parallel zur Symmetrieachse mit einseitig befestigtem Flansch und Solarzellen;
- FIG 7:: Schauglas aus FIG 6 in der Aufsicht von außen;
- FIG 8:: Schauglas aus FIG 6 in der Aufsicht von innen;
- FIG 9:: Schauglas im Schnitt parallel zur Symmetrieachse mit beidseitig befestigtem Flansch und LED-Kranz auf dem inneren Flansch;
- FIG 10:: Schauglas im Schnitt parallel zur Symmetrieachse mit beidseitig befestigtem Flansch und LED-Kranz in einer Nut des inneren Flansches;
- FIG 11:: Schauglas aus FIG 10 in der Aufsicht von innen.

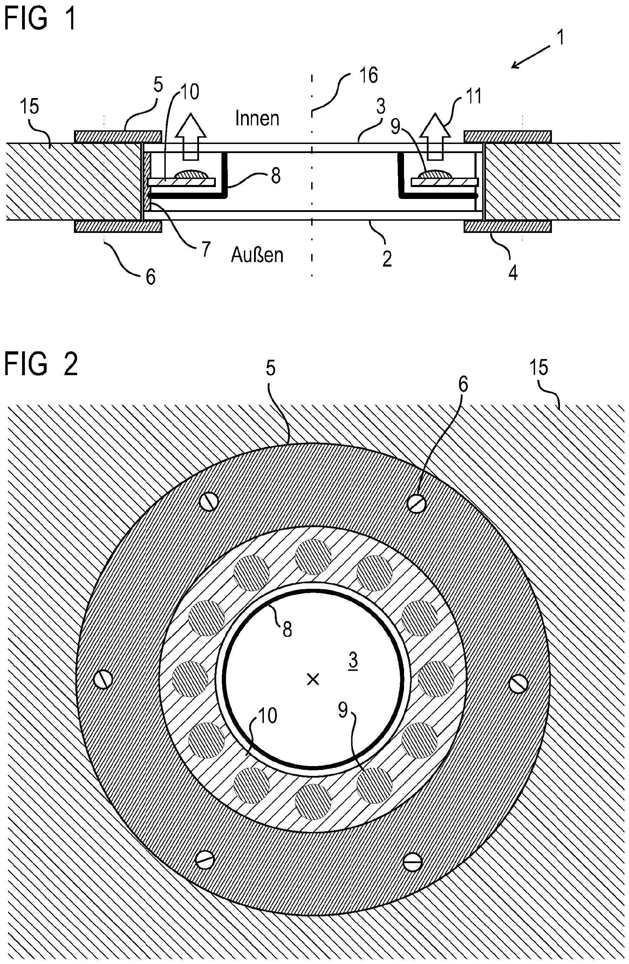

Eine einfache Ausführung eines erfindungsgemäßen Gehäuses einer Klima- oder Lüftungsanlage mit einem Schauglas beziehungsweise einer Schauglasarmatur ist in den Figuren 1 und 2 dargestellt. Die **Figur 1** zeigt ein Schauglas 1 in einem Querschnitt parallel zur Symmetrieachse 16 des Schauglases 1 mit beidseitig befestigtem Flansch 4 und 5, während die **Figur 2** eine Aufsicht auf das Schauglas 1 von der Innenseite des Raumes oder Gehäuses mit der Wandung 15 aus darstellt. In der gezeigten Ausführung besitzt das Schauglas 1 eine durchsichtige äußere Scheibe 2 und eine durchsichtige innere Scheibe 3, die über einen peripher und zwischen den Scheiben 2 und 3 angeordneten Abstandshalter 7 parallel zueinander ausgerichtet werden.

Zur Befestigung in der Wandung 15 verfügt das Schauglas 1 über je einen die äußere Scheibe 2 und einen die innere Scheibe 3 haltenden Flansch 4 und 5, die beide über Befestigungselemente 6, zum Beispiel Schrauben, flach an der Wandung 15 anliegend verbunden sind. Der zylinderförmig ausgebildete Abstandshalter 7 verfügt über eine am Innenradius verlaufende, flache Nut, in welche der rondenförmige Träger 10 eingeklipst ist. Um das Einklipsen zu erleichtern, kann der Träger 10 und/oder der Abstandshalter 7 zusätzlich auch radial mit einem Schlitz geteilt werden, so dass sich der Träger 10 zur Montage etwas zusammendrücken lässt beziehungsweise der Abstandshalter 7 etwas geweitet werden kann.

Auf dem Träger 10 befindet sich eine Vielzahl von lichtemittierenden Dioden (LEDs) 9, die meist mit einem Substrat unmittelbar auf dem Träger angebracht sind. Zur Abschattung der Lichtemissionen der LEDs 9, die nicht in Richtung der Hauptemissionsrichtung 11, also in den Innenraum hin, gerichtet sind, dient ein im Schnitt L-förmiges lichtdichtes Abschattungselement 8, das ebenso an der Innenseite des Abstandshalters 7 in einer umlaufenden Nut eingeklipst ist.

Selbstverständlich benötigen die hier gezeigten LEDs 9 eine Strom- und Spannungsversorgung zum Betrieb der LEDs. Grundsätzlich kann dabei auf eine bestehende kabelgebundene Stromversorgung zurückgegriffen werden oder es kann wegen des geringen Energiebedarfs der eingesetzten LEDs 9 auch auf eine Stromversorgung mit einer Batterie 13 gesetzt werden. Eine weitere Variante besteht darin, die LEDs 9 kontaktlos durch eine induktive oder kapazitive Energieübertragung zu betreiben. Beispielsweise kann im außenliegenden Flansch 4 eine Wicklung integriert werden, welche eine Wechselspannung auf einer Wicklung auf dem Träger 10 induziert und damit die LEDs 9 - mit einer entsprechenden Schaltung zur Erzeugung einer Gleichspannung - direkt betreibt.

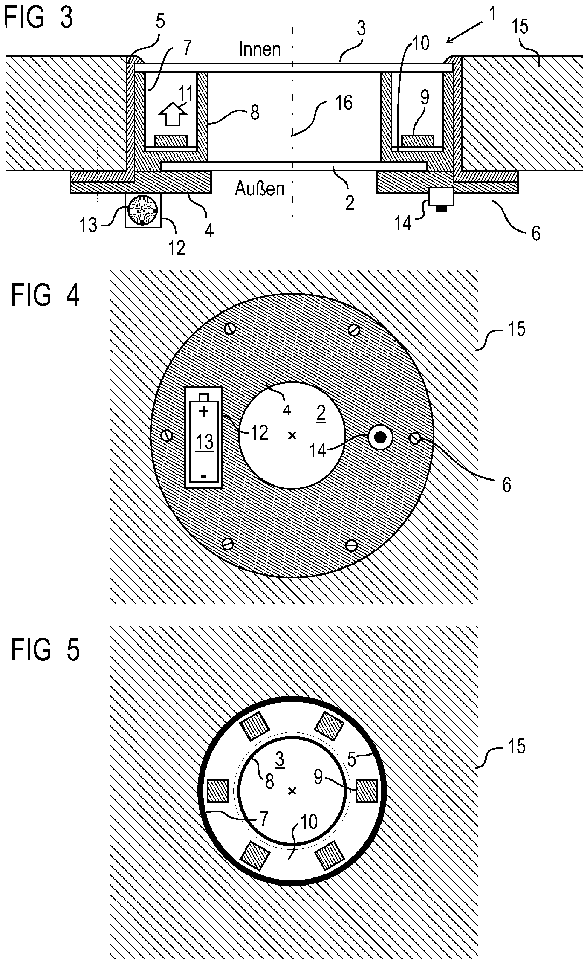

Eine andere Ausführungsform eines Schauglases 1 mit einseitig befestigtem Flansch 4, 5 ist in den Figuren 3 bis 5 dargestellt. Hierbei zeigt die **Figur 3** wiederum das Schauglas 1 im Schnitt parallel zur Symmetrieachse, die **Figur 4** dieses Schauglas 1 in der Aufsicht von außen und die **Figur 5** dieses Schauglas 1 in der Aufsicht vom innen, wobei außen und innen sich jeweils auf ein Gehäuse oder einen Raum bezieht, in dessen Wandung das Schauglas eingebaut ist und wobei davon ausgegangen wird, dass die Beobachtung von außen nach innen in einen Raum hinein stattfindet.

In dieser Ausführung verfügt das Schauglas 1 ebenfalls über eine außen und eine innen angeordnete Scheibe 2 und 3, wobei die innen liegende Scheibe 3 durch einen von außen nach innen reichenden Flansch 5 und die außen liegende Scheibe 2 durch einen nur außen liegenden Flansch 4 gehalten wird. Zwischen den Scheiben 2 und 3 ist ein Abstandshalter 7 angeordnet, der einstückig in einen LED-Träger 10 und ein Abschattungselement 8 übergeht und dabei im Schnitt der Figur 3 im wesentlichen U-förmig ausgebildet ist. Innen auf der Basis des LED-Trägers 10 ist eine Vielzahl von LEDs 9 kreisförmig angeordnet. Erfindungsgemäß lässt sich allerdings die Tiefe des "U" variieren beziehungsweise unterschiedlich gestalten, so dass die Richtwirkung des von den LEDs 9 emittierten Lichtes unterschiedlich stark sein kann. Grundsätzlich ist es dabei möglich, die Einbautiefe der LEDs 9 in diesem aus Abstandshalter 7, LED-Träger 10 und Abschattungselement 8 gebildeten "U" variabel zu gestalten, so dass durch eine Veränderung der Raumwinkel der Abstrahlung des Lichtes für eine optimale Ausleuchtung oder gewünscht gerichtete Beleuchtung variiert werden kann.

In der hier in den Figuren 3 bis 5 gezeigten Ausführungsvariante erfolgt die Stromversorgung der LEDs 9 beispielhaft durch eine an der Außenseite des äußeren Flansches 4 angeordnete Batterie 13, die sich in einem außen befestigten Batteriegehäuse 12 befindet. Zum Ein- und Ausschalten der LEDs 9 befindet sich ebenfalls am außen liegenden Flansch 4 ein Schalter oder Taster 14 mit entsprechender Verkabelung zwischen den LEDs 9, der Batterie 13 und dem Schalter/Taster 14.

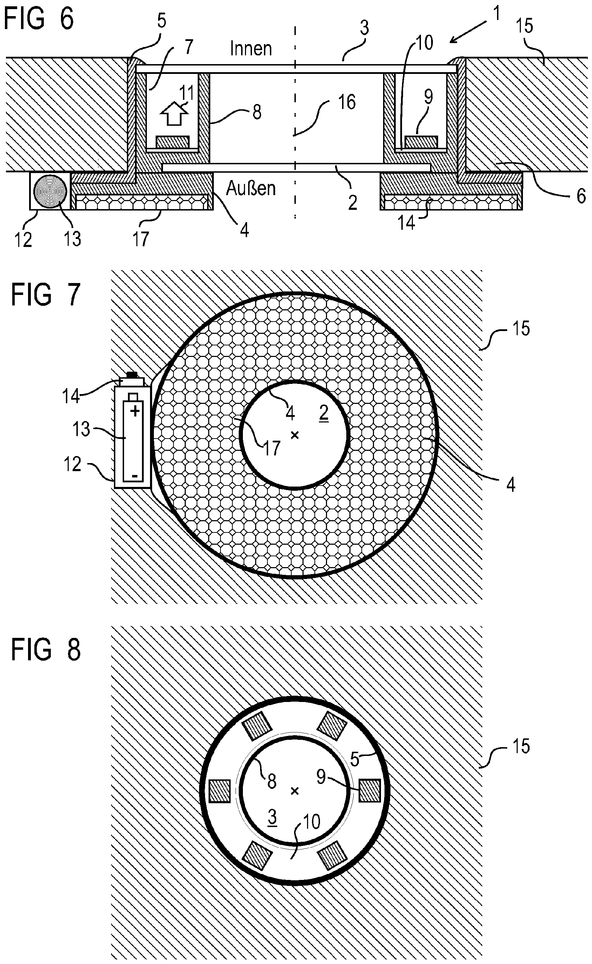

Die Figuren 6 bis 8 zeigen eine Variante der Ausführung des Schauglases 1 aus den Figuren 3 bis 5, bei der als Stromversorgung Solarzellen 17 eingesetzt werden. Die **Figur 6** zeigt wieder das Schauglas 1 im Schnitt parallel zur Symmetrieachse 16 mit einseitig befestigtem Flansch 4, 5 und Solarzellen 17, die **Figur 7** das Schauglas 1 aus der Figur 6 in einer Aufsicht von außen und die **Figur 8** dieses Schauglas 1 in der Aufsicht von innen. Der Aufbau der Flansche 4 und 5 und der Scheiben 2 und 3 entspricht hier der Variante aus den Figuren 3 bis 5, wobei hier auf der Außenseite des Flansches 4 anstelle des Batteriegehäuses 12 und des Schalter/Tasters 14 Solarzellen 17 zur Energieversorgung der LEDs 9 eingelassen sind. Zusätzlich kann, wie hier gezeigt, ein Akku 13 als Zwischenspeicher dienen. Hier ist dieser in einem Batteriegehäuse 12 untergebracht, der seitlich in den außen liegenden Flansch 4 integriert ist. Der Schalter/Taster 14 ist dabei unmittelbar am Batteriegehäuse 12 angebracht beziehungsweise in dieses integriert. Aufgrund des geringen Energieverbrauches der als Leuchtmittel verwendeten LEDs 9 kann mit dieser Ausführung auf eine externe Verkabelung oder ständigen Batteriewechsel verzichtet werden.

Ergänzend wird darauf hingewiesen, dass in der gezeigten Ausführung der nach innen liegende Teil des Flansches 5 an seiner radial nach innen liegenden Kante angefast ist und dadurch in diesem Bereich an den Materialübergängen nur stumpfe Winkel im Innenraum vorliegen, die einfach zu reinigen sind. Damit eignet sich eine derartige Ausführung besonders für Schaugläser, die in hygienisch rein zu haltenden Umgebungen eingesetzt werden sollen.

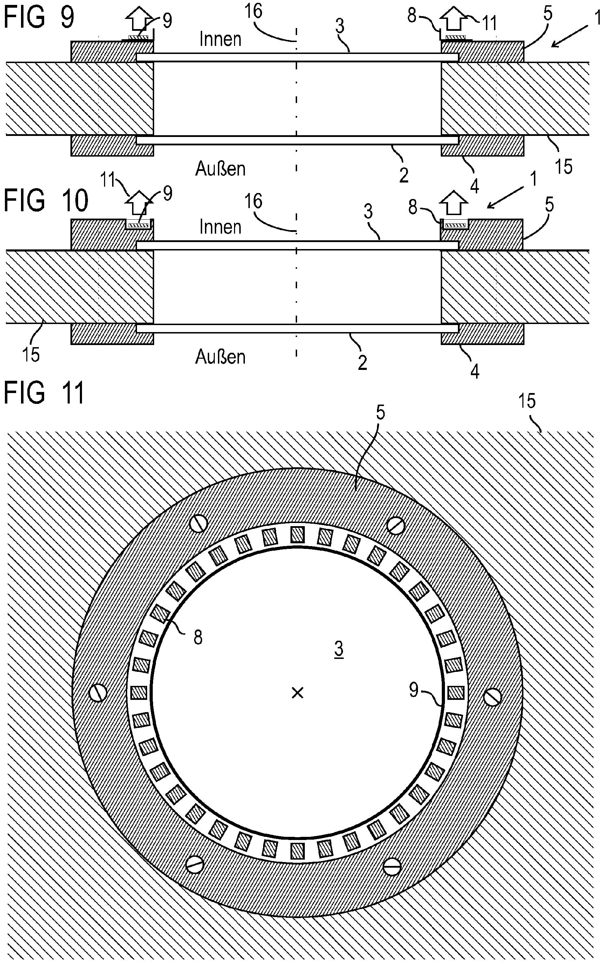

In der **Figur 9** ist eine sehr einfach ausgestaltete, jedoch nicht-erfindungsgemäße Variante eines Schauglases 1 im Schnitt parallel zur Symmetrieachse 16 mit beidseitig befestigtem Flansch 4, 5 und einem LED-Kranz (9) auf dem inneren Flansch 5 gezeigt. Hierbei dient die Wandung 15 selbst, auf der das Schauglas 1 montiert wird. als Abstandshalter zwischen der äußeren und inneren Scheibe 2 und 3. Die beiden Scheiben 2 und 3 werden von den Flanschen 4 und 5 durch radial nach innen offene Nuten beziehungsweise Absätze zentriert. Der auf dem inneren Flansch 5 montierte Kranz aus einer Vielzahl an LEDs 9 besteht dabei aus einem LED-Träger 10, der radial innen parallel zur Symmetrieachse 16verläuft und damit als Abschattungselement 8 dient.

Schließlich ist in den Figuren 10 und 11 noch eine weitere sehr einfache, jedoch ebenfalls nicht-erfindungsgemäße Ausgestaltungsform eines Schauglases 1 im Schnitt parallel zur Symmetrieachse 16 mit beidseitig befestigtem Flansch 4 und 5 und einem LED-Kranz 9 in einer Nut des inneren Flansches 5 und als Aufsicht von innen gezeigt. Im Gegensatz zur Ausführung des Schauglases 1 aus der Figur 9 ist hierbei das rondenförmig ausgestaltete Substrat mit den LEDs 9 in einer umlaufenden nach innen gerichteten Nut im inneren Flansch 5 eingelassen. Die Wände der Nut fungieren hierbei als Abschattung der LEDs.

### Bezugszeichenliste

- 1: Schauglas/Schauglasarmatur
- 2: Sichtscheibe außen
- 3: Sichtscheibe innen
- 4: Flansch für Sichtscheibe außen
- 5: Flansch für Sichtscheibe innen
- 6: Befestigungselement / Verschraubung
- 7: Abstandshalter
- 8: Abschattungselement/Lichtabdeckung
- 9: LED (lichtemittierende Diode)
- 10: LED-Träger
- 11: Hauptemissionsrichtung
- 12: Batteriegehäuse
- 13: Batterie/Akku/Stromspeicherelement
- 14: Ein-/Aus-Schalter/-Taster
- 15: Wandung
- 16: Symmetrieachse
- 17: Solarzellen

## Patentansprüche

1. Gehäuse einer Klima- oder Lüftungsanlage mit mindestens einer Außenwandung (15) und einem Innenraum, wobei die mindestens eine Außenwandung (15) mindestens ein Schauglas (1) zur Beobachtung des von der mindestens einen Außenwandung (15) abgeschlossenen Innenraumes aufweist,
wobei das Schauglas (1) aufweist:
1.1. einen umlaufenden Flansch (4, 5) zur Befestigung des Schauglases (1) in einer Öffnung der Wandung (15),
1.2. genau zwei Scheiben zur Beobachtung des Innenraumes von außerhalb des Innenraumes, nämlich eine innere und eine äußere Scheibe (2, 3), wobei die innere Scheibe (3) auf der zu dem zu beobachtenden Innenraum hin orientierten Seite des Schauglases vorliegt und die Beobachtung von außen nach innen in den zu beobachtenden Innenraum hinein erfolgt,
1.3. eine Vielzahl von, über den überwiegenden Teil des peripheren Bereichs des Schauglases (1) angeordneter, LEDs (9) mit einer unmittelbar in den Innenraum ausgerichteten Hauptemissionsrichtung (11), wobei die LEDs (9) zwischen der inneren und der äußeren Scheibe (2, 3) angeordnet sind, und
1.4. eine ein- oder mehrteilige Lichtabdeckung (8), welche hinter den LEDs (9) derart angeordnet ist, dass das von den LEDs (9) abgestrahlte Licht keine nach außen gerichtete Komponente aufweist, wobei
1.5. die Lichtabdeckung (8) zwischen der inneren und äußeren Scheibe (3, 2) positioniert und derart ausgebildet ist, dass sie bis an die innere Scheibe (3) heranreicht, damit kein Licht in den zentralen Zwischenraum zwischen den Scheiben (2, 3) einstrahlt und eine Blendwirkung durch die Beleuchtung vermieden wird.

2. Gehäuse gemäß dem voranstehenden Patentanspruch 1,
dadurch g e kenn z e i chne t, dass der Flansch (4, 5) mehrteilig ausgeführt ist, wobei die äußere und innere Scheibe (2, 3) jeweils mit einem äußeren beziehungsweise inneren Teil des Flansches (4, 5) verbunden sind.

3. Gehäuse gemäß dem voranstehenden Patentanspruch 2,
**dadurch gekennzeichnet, dass** der äußere und innere Flansch (4, 5) dazu ausgebildet ist, in einer Öffnung der Wandung (15) eingebaut zu werden.

4. Gehäuse gemäß einem der voranstehenden Patentansprüche 1 bis 3, **dadurch gekennzeichnet, dass** ein ein- oder mehrteiliger Abstandshalter (7) zwischen dem äußeren und inneren Teil des Flansches (4, 5) oder der inneren und äußeren Scheibe (2, 3) angeordnet ist.

5. Gehäuse gemäß einem der voranstehenden Patentansprüche 1 bis 4, **dadurch gekennzeichnet, dass** die Lichtabdeckung (8) in ihrem radialen Schnitt L-förmig ausgebildet ist.

6. Gehäuse gemäß einem der voranstehenden Patentansprüche 1 bis 5, **dadurch gekennzeichnet, dass** das Schauglas (1) im Querschnitt parallel zur Wandung (15) eine Kontur aufweist, die für einen Einbau in einen runden Ausschnitt ausgelegt ist, vorzugsweise kreisrund ausgeführt ist.

7. Gehäuse gemäß einem der voranstehenden Patentansprüche 1 bis 6, **dadurch gekennzeichnet, dass** die LEDs (9) auf einem rondenförmigen Träger (10) angeordnet sind, die vorzugsweise zwischen der inneren und äußeren Scheibe (3, 2) positioniert ist.

8. Gehäuse gemäß einem der voranstehenden Patentansprüche 1 bis 7, **dadurch gekennzeichnet, dass** zur Energieversorgung der LEDs (9) eine nach außen führende Stromleitung vorliegt.

9. Gehäuse gemäß einem der voranstehenden Patentansprüche 1 bis 8, **dadurch gekennzeichnet, dass** zur Energieversorgung der LEDs (9) ein Batteriegehäuse (12) mit Batterie (13) im Schauglas (1) integriert ist.

10. Gehäuse gemäß einem der voranstehenden Patentansprüche 1 bis 8, **dadurch gekennzeichnet, dass** zur Energieversorgung der LEDs (9) wandungsseitig ein Sender und am Schauglas (1) ein Empfänger zur kapazitiven oder induktiven Kopplung für eine drahtlose Energieübertragung angeordnet ist.

11. Gehäuse gemäß dem voranstehenden Patentanspruch 10,
**dadurch gekennzeichnet, dass** zur Zwischenspeicherung der übertragenen Energie mindestens ein Stromspeicherelement (13) vorliegt.

12. Gehäuse gemäß einem der voranstehenden Patentansprüche 1 bis 8, **dadurch gekennzeichnet, dass** zur Energieversorgung der LEDs (9) mindestens eine nach außen gerichtete Solarzelle (17) mit mindestens einem Stromspeicherelement (13) aufweist.

## Claims

1. Housing of an air-conditioning or ventilation system having at least one outer wall (15) and an interior, the at least one outer wall (15) having at least one inspection glass (1) for observing the interior, which is closed off by the at least one outer wall (15), wherein the inspection glass (1) has:
1.1. a circumferential flange (4, 5) for securing the inspection glass (1) in an opening in the wall (15),
1.2. precisely two panes for observing the interior from outside the interior, specifically an inner pane and an outer pane (2, 3), the inner pane (3) being on the side of the inspection glass that is oriented towards the interior to be observed and the observation taking place from the outside to the inside into the interior to be observed,
1.3. a multiplicity of LEDs (9), arranged over the majority of the peripheral area of the inspection glass (1), having a main emission direction (11) oriented directly into the interior, the LEDs (9) being arranged between the inner and outer panes (2, 3), and
1.4. an integral or multipartite light cover (8), which is arranged behind the LEDs (9) in such a way that the light emitted by the LEDs (9) has no outwardly directed component, wherein
1.5. the light cover (8) is positioned between the inner and outer panes (3, 2) and is in a form such that it comes up to the inner pane (3) so that no light is radiated into the central interspace between the panes (2, 3) and a dazzle effect due to the illumination is avoided.

2. Housing according to preceding Patent Claim 1, **characterized in that** the flange (4, 5) is multipartite, the outer and inner panes (2, 3) being connected to outer and inner parts of the flange (4, 5), respectively.

3. Housing according to preceding Patent Claim 2, **characterized in that** the outer and inner flanges (4, 5) are designed to be installed in an opening in the wall (15).

4. Housing according to one of preceding Patent Claims 1 to 3, **characterized in that** an integral or multipartite spacer (7) is arranged between the outer and inner parts of the flange (4, 5) or the inner and outer panes (2, 3).

5. Housing according to one of preceding Patent Claims 1 to 4, **characterized in that** the light cover (8) has an L-shaped radial section.

6. Housing according to one of preceding Patent Claims 1 to 5, **characterized in that** the cross section of the inspection glass (1) parallel to the wall (15) has a contour that is designed for installation in a round portion, preferably is circular.

7. Housing according to one of preceding Patent Claims 1 to 6, **characterized in that** the LEDs (9) are arranged on a rondel-shaped support (10) that is preferably positioned between the inner and outer panes (3, 2).

8. Housing according to one of preceding Patent Claims 1 to 7, **characterized in that** there is an outwardly routed power line for supplying power to the LEDs (9) .

9. Housing according to one of preceding Patent Claims 1 to 8, **characterized in that** a battery housing (12) containing a battery (13) is integrated in the inspection glass (1) to supply power to the LEDs (9).

10. Housing according to one of preceding Patent Claims 1 to 8, **characterized in that** to supply power to the LEDs (9) a transmitter is arranged on the wall and a receiver is arranged on the inspection glass (1) for the purpose of capacitive or inductive coupling for wireless power transmission.

11. Housing according to preceding Patent Claim 10, **characterized in that** there is at least one electrical energy storage element (13) to buffer-store the transmitted power.

12. Housing according to one of preceding Patent Claims 1 to 8, **characterized in that** it comprises at least one outwardly directed solar cell (17) with at least one electrical energy storage element (13) to supply power to the LEDs (9).

## Revendications

1. Boîtier de climatisation ou de ventilation comportant au moins une paroi extérieure (15) et un espace intérieur, ladite au moins une paroi extérieure (15) comportant au moins un verre d'inspection (1) permettant d'observer l'espace intérieur fermé par ladite au moins une paroi extérieure (15),
le verre d'inspection (1) comportant :
1.1. une bride périphérique (4, 5) permettant de fixer le verre d'inspection (1) dans une ouverture ménagée dans la paroi (15),
1.2. exactement deux vitres permettant d'observer l'espace intérieur depuis l'extérieur de l'espace intérieur, à savoir une vitre intérieure et une vitre extérieure (2, 3), la vitre intérieure (3) se trouvant sur le côté du verre d'inspection qui est tourné vers l'espace intérieur à observer et l'observation se faisant de l'extérieur vers l'intérieur de l'espace intérieur à observer,
1.3. une pluralité de LED (9) disposées sur la majeure partie de la zone périphérique du verre d'inspection (1), et dont la direction d'émission principale (11) est directement orientée vers l'espace intérieur, les LED (9) étant disposées entre les vitres intérieure et extérieure (2, 3), et
1.4. un cache-lumière (8) en une ou plusieurs parties, qui est disposé à l'arrière des LED (9) de manière à ce que la lumière émise par les LED (9) ne comporte aucune composante dirigée vers l'extérieur,
1.5. le cache-lumière (8) étant positionné entre les vitres intérieure et extérieure (3, 2) et étant conçu de manière à ce qu'il s'étende jusqu'à la vitre intérieure (3), afin qu'aucune lumière ne soit rayonnée dans l'espace central entre les vitres (2, 3) et d'éviter tout effet d'éblouissement dû à l'éclairage.

2. Boîtier selon la revendication 1, **caractérisé en ce que** la bride (4, 5) est réalisée en plusieurs parties, les vitres extérieure et intérieure (2, 3) étant respectivement reliées à des parties extérieure et intérieure de la bride (4, 5).

3. Boîtier selon la revendication 2 précédente, **caractérisé en ce que** les brides extérieure et intérieure (4, 5) sont conçues pour être installées dans une ouverture ménagée dans la paroi (15).

4. Boîtier selon l'une des revendications 1 à 3 précédentes, **caractérisé en ce qu'**une entretoise (7) en une ou plusieurs parties est disposée entre les parties extérieure et intérieure de la bride (4, 5) ou entre les vitres intérieure et extérieure (2, 3).

5. Boîtier selon l'une des revendications 1 à 4 précédentes, **caractérisé en ce que** le cache-lumière (8) est réalisé en forme de L dans sa section radiale.

6. Boîtier selon l'une des revendications 1 à 5 précédentes, **caractérisé en ce que** le verre d'inspection (1) présente, en section transversale, parallèlement à la paroi (15), un contour qui est conçu pour un montage dans une découpe arrondie, et de préférence réalisé de manière circulaire.

7. Boîtier selon l'une des revendications 1 à 6 précédentes, **caractérisé en ce que** les LED (9) sont disposées sur un support (10) de forme arrondie, qui est de préférence positionné entre les vitres intérieure et extérieure (3, 2).

8. Boîtier selon l'une des revendications 1 à 7, **caractérisé en ce qu'**il est prévu une ligne électrique menant vers l'extérieur pour alimenter en énergie les LED (9) .

9. Boîtier selon l'une des revendications 1 à 8 précédentes, **caractérisé en ce qu'**un boîtier de batterie (12) comportant une batterie (13) est intégré au verre d'inspection (1) pour alimenter en énergie les LED (9).

10. Boîtier selon l'une des revendications 1 à 8 précédentes, **caractérisé en ce qu'**il est prévu, pour alimenter en énergie les LED (9), un émetteur du côté de la paroi et un récepteur sur le verre d'inspection (1), permettant un couplage capacitif ou inductif pour une transmission d'énergie sans fil.

11. Boîtier selon la revendication 10 précédente, **caractérisé en ce qu'**il est prévu au moins un élément de stockage d'énergie électrique (13) pour stocker temporairement l'énergie transmise.

12. Boîtier selon l'une des revendications 1 à 8 précédentes, **caractérisé en ce qu'**il comporte au moins une cellule solaire (17) orientée vers l'extérieur et dotée d'au moins un élément de stockage d'énergie électrique (13) pour alimenter en énergie les LED (9).
